# EUROPÄISCHE PATENTANMELDUNG

(11) **EP 2 853 856 A1**
(43) Veröffentlichungstag der Anmeldung: **01.04.2015**
(21) Anmeldenummer: 14186013.0
(22) Anmeldetag: 23.09.2014
(51) Int. Cl.: G01B 11/30, G01N 21/88, G01N 21/95

(54) **Verfahren und Vorrichtung zur optischen Untersuchung einer Oberfläche eines Körpers**

(30) Priorität: 26.09.2013 AT 506212013
(71) Anmelder: Polymer Competence Center Leoben Gmbh, 8700 Leoben (AT)
(72) Erfinder: Gruber, Dieter P., 8103 Eisbach (AT)
(74) Vertreter: Wirnsberger, Gernot

(57) **Zusammenfassung**

Die Erfindung betrifft ein Verfahren zur optischen Untersuchung einer Oberfläche eines Körpers (2), insbesondere eines Freiformteils aus Kunststoff, wobei der Körper (2) von einem Roboterarm (3) gehalten wird. Um eine Untersuchung eines freigeformten Körpers (2) mit hoher Genauigkeit einer Fehlererkennung zu automatisieren, ist erfindungsgemäß vorgesehen, dass ein vorgegebener Teilbereich der Oberfläche des Körpers (2) etwa senkrecht zu einer optischen Achse (X) zumindest einer ortsfesten Kamera (4) gestellt und mit dieser erfasst wird, wonach der Körper (2) vom Roboterarm (3) zur Erfassung des nächsten Teilbereiches nachgeführt wird, um die Oberfläche des Körpers (2) bereichsweise mit der zumindest einen Kamera (4) unter etwa senkrechter Ausrichtung der Teilbereiche zur optischen Achse (X) zu erfassen.

Weiter betrifft die Erfindung eine Vorrichtung (1) zur optischen Untersuchung eines Körpers (2), insbesondere eines Freiformteils aus Kunststoff, umfassend einen Roboterarm (3), der den Körper (2) hält.

Des Weiteren betrifft die Erfindung eine Verwendung einer erfindungsgemäßen Vorrichtung (1).

## Beschreibung

Die Erfindung betrifft ein Verfahren zur optischen Untersuchung einer Oberfläche eines Körpers, insbesondere eines Freiformteils aus Kunststoff, wobei der Körper von einem Roboterarm gehalten wird.

Des Weiteren betrifft die Erfindung eine Vorrichtung zur optischen Untersuchung eines Körpers, insbesondere eines Freiformteils aus Kunststoff, umfassend einen Roboterarm, der den Körper hält.

Weiter betrifft die Erfindung eine Verwendung einer Vorrichtung der vorstehend genannten Art.

Bei einer Massenproduktion von Körpern wie z. B. bei Formteilen aus Kunststoff im Spritzguss ist in der Regel eine Qualitätssicherung vorgesehen, damit fehlerhaft produzierte Körper ausgeschieden werden können, ehe diese in den Vertrieb gelangen und zu späteren Reklamationen führen bzw. bevor diese einer weiteren kostenintensiven Bearbeitung unterzogen werden. Werden Körper wie Spritzgussteile aus Kunststoff in Masse hergestellt, muss üblicherweise jedes einzelne Teil auf bestimmte Qualitätskriterien optisch beurteilt werden.

Oberflächeneigenschaften von Körpern werden häufig von geschultem Personal manuell inspiziert. Das menschliche Auge kann variierende Oberflächeneigenschaften eines Körpers wie z. B. Fehlstellen gut erkennen. Dabei ist grundsätzlich von Vorteil, dass eine menschliche Qualitätsbeurteilung optimal entspricht, weil vom geschulten Personal nicht erkannte Fehlstellen auch von einem Käufer des Körpers nicht erkannt werden. Nachteilig ist jedoch, dass das Auge einer Massenware auf Qualität prüfenden Person ermüden kann und somit immer wieder Pausen eingelegt werden müssen. Darüber hinaus nimmt die Trefferrate bereits nach einer Zeit von etwa zehn Minuten drastisch ab und nach etwa 30 Minuten ist die Trefferrate zur Qualitätsbestimmung nicht mehr ausreichend. Weiter hat auch bei geschultem Personal jeder Mensch eine andere Empfindsamkeitsschwelle und so kann es vorkommen, dass eine Oberfläche eines Körpers von einem Menschen als fehlerfrei gewertet wird, ein anderer jedoch durchaus Fehlstellen erkennen kann. Die händische Untersuchungsmethode funktioniert auch nicht immer mit gleicher Zuverlässigkeit, da Empfindsamkeiten auch von der Tagesverfassung eines Körper inspizierenden Menschen abhängig sind. Alle genannten Nachteile verringern die Genauigkeit, mit welcher Körper untersucht werden. Deshalb wird versucht, Vorrichtungen zum automatischen Untersuchen einer Oberfläche eines Körpers bereitzustellen und einzusetzen.

Aus dem Stand der Technik sind Verfahren und Vorrichtungen zur optischen Untersuchung einer Oberfläche eines Körpers bekannt geworden. Bei den Untersuchungen soll die Oberfläche des Körpers auf seine Struktur, etwaige Fehler und seine Qualität automatisiert und maschinell geprüft werden. Dabei wird die Oberfläche des Körpers von einer Kamera oder dergleichen aufgenommen und die aufgenommenen Bilder werden mittels einer Auswerteeinheit ausgewertet. Dieser Prozess funktioniert bei Körpern mit einer planen Oberfläche mit ausreichender Zuverlässigkeit und wird bereits verbreitet angewendet.

Soll die Oberfläche eines dreidimensionalen freigeformten Körpers untersucht werden, also eines Körpers mit einem oder mehreren gekrümmten Bereichen, ist dieser Prozess nicht anwendbar. Ein auf die Oberfläche eines freigeformten Körpers treffender Lichtstrahl wird aufgrund der Krümmungen nicht mehr nur gleichmäßig in eine vorhersehbare Richtung reflektiert, sondern aufgrund der freigeformten Oberflächenstruktur in alle möglichen Richtungen. Für entsprechende Untersuchungen muss daher meist auf eine menschliche Inspektion zurückgegriffen werden. Dies hat jedoch die oben beschriebenen Nachteile.

Um die Nachteile menschlicher Inspektion zu verringern, wird versucht, auch das Untersuchen eines freigeformten Körpers zu automatisieren. Die DE 197 39 250 A1 offenbart in einem Ansatz hierfür ein Verfahren und eine Vorrichtung zum optischen Erfassen von Freiformflächen. Dabei werden sowohl eine Lichtquelle als auch eine Kamera sowie das Freiformteil selbst von je einem Roboterarm gehalten. Die drei Roboterarme werden so gegeneinander verdreht, dass das Freiformteil von jeder möglichen Seite bildlich aufgenommen wird. Einzeln aufgenommene Bilder werden dann in einem Rechner mittels einer Software zusammengefügt, um ein vollständiges Bild der gesamten Oberfläche zu ergeben. Diese Vorrichtung hat den Nachteil eines apparativ großen Aufwandes. Weiter können die ausgewerteten Daten einen relativ großen systematischen Fehler aufweisen, da sich die systematischen Fehler jedes Roboterarmes addieren.

Aufgabe der Erfindung ist es, ein Verfahren der eingangs genannten Art anzugeben, mit welchem eine beliebig freigeformte Oberfläche von Körpern automatisiert mit einer hohen Genauigkeit untersucht werden kann.

Eine zweite Aufgabe der Erfindung ist es, eine Vorrichtung der eingangs genannten Art anzugeben, welche eine automatisierte Untersuchung von freigeformten Körpern mit hoher Genauigkeit ermöglicht.

Eine dritte Aufgabe der Erfindung ist es, eine Verwendung einer derartigen Vorrichtung anzugeben.

Die erste Aufgabe wird erfindungsgemäß gelöst, wenn ein vorgegebener Teilbereich der Oberfläche des Körpers etwa senkrecht zu einer optischen Achse zumindest einer ortsfesten Kamera gestellt und mit dieser erfasst wird, wonach der Körper vom Roboterarm zur Erfassung des nächsten Teilbereiches nachgeführt wird, um die Oberfläche des Körpers bereichsweise mit der zumindest einen Kamera unter etwa senkrechter Ausrichtung der Teilbereiche zur optischen Achse zu erfassen. Die verwendete Kamera kann jede Art von Kamera sein, wobei üblicherweise eine Industriekamera wie eine CCD- oder CMOS-Kamera verwendet wird.

Ein mit der Erfindung erzielter Vorteil ist insbesondere darin zu sehen, dass durch ein etwa senkrechtes Ausrichten eines Teilbereiches der Oberfläche des Körpers zur optischen Achse der Kamera die gleichen Voraussetzungen für diesen Teilbereich geschaffen werden wie bei einer Untersuchung einer planen Oberfläche und der Teilbereich problemlos mit hoher Genauigkeit von der Kamera erfasst werden kann. Beim Nachführen des Körpers wird wiederum ein Teilbereich der Oberfläche des Körpers etwa senkrecht zur optischen Achse der Kamera gestellt. Somit werden von der Kamera einzelne, quasi plane Teilbereiche der Oberfläche des dreidimensionalen Körpers aufgenommen. Anhand der Teilbereiche kann die gesamte Oberfläche oder gegebenenfalls auch ein Ausschnitt derselben konstruiert und in Bezug auf mögliche Fehler ausgewertet werden.

Des Weiteren ist es von Vorteil, wenn sequenziell alle vorgegebenen Teilbereiche der Oberfläche des Körpers etwa senkrecht zu einer Achse der zumindest einen Kamera gestellt und von dieser erfasst werden, wobei Abmessungen der Teilbereiche von einer Krümmung der Oberfläche des Körpers vorgegeben werden. Durch diese Maßnahme kann jede beliebige Oberfläche eines Körpers zeitoptimiert mit gleich guter Qualität und Genauigkeit untersucht werden, da die Teilbereiche abhängig von der Oberfläche des Körpers unterschiedlich groß sind. Eine Vorgabe der Teilbereiche kann dabei anhand der geometrischen Daten des Körpers erfolgen, die in der Regel digital vorliegen. Möglich ist es auch, dass bei Anfahren einer Produktion eines neuen Spritzgussteils durch Vermessung eines ersten Körpers die Teilbereiche für die Untersuchung bei der folgenden Massenproduktion festgelegt werden.

Vorteilhaft ist auch, wenn die Oberfläche des Körpers von Licht aus insbesondere ortsfesten Lichtquellen wie LEDs beleuchtet wird und die Reflexionen des Lichtes an der Oberfläche des Körpers von der Kamera erfasst werden. Die Oberfläche eines Teilbereiches des Körpers kann dadurch so ausgeleuchtet werden, dass sich optimale Aufnahmebedingungen für verschiedene zu erkennende Fehlstellen ergeben. Dabei werden die Lichtquellen wie LEDs verschieden geschaltet, um verschiedene Arten von Fehlstellen auszuleuchten und in weiterer Folge zu erkennen. Bei den verschiedenen Arten von Fehlstellen handelt es sich z. B. um Glanzvariationen, Kratzer und Fleckigkeit und/oder insbesondere bei Kunststoffen um Printmusterfehler, Bindenähte, Einfallsstellen, Schlieren und sogenannte "Tigerstreifen".

Günstig ist es, wenn eine Bewegung des Roboterarms von einer Steuereinheit gesteuert wird, damit der Körpers automatisiert und ohne sonstige Unterstützung vom Roboterarm gehalten sowie gedreht werden kann und die einzelnen Teilbereiche der Oberfläche des Körpers unter Aufnahme der gesamten Oberfläche relativ rasch abgefahren werden können. Eine Ausführungsform der Erfindung sieht vor, dass die Steuereinheit den Roboterarm in zumindest drei unterschiedlichen Betriebszuständen betreiben kann. Diese Betriebszustände sind davon abhängig, auf welche Fehler bzw. Merkmale der Körper getestet wird und ermöglichen es demnach, dass der Roboterarm fehlerspezifisch eingesetzt werden kann. In weiterer Folge wird dadurch die Geschwindigkeit, mit welcher Oberflächen von Körpern untersucht werden können, merklich erhöht.

Für eine automatisierte Auswertung ist es von Vorteil, wenn von der zumindest einen Kamera erfasste Bilder der Oberfläche zu einer Auswerteeinheit gesendet und von dieser ausgewertet werden.

Vorteilhaft ist es, wenn Signale von der Auswerteeinheit zur Steuereinheit gesendet werden. Damit wird der Ablauf des gesamten Prozesses dahin gehend automatisiert, dass etwaige von der Auswerteeinheit nicht ausreichend bewertbare Positionen bzw. Teilbereiche des Körpers nochmals aufgenommen werden können, ehe der nächste Teilbereich untersucht wird.

Des Weiteren ist es von Vorteil, wenn von der Auswerteeinheit Kriterien für Defekte vorgegeben werden. Diese Kriterien werden so gesetzt, dass die Wahrnehmungsschwelle eines durchschnittlichen menschlichen Auges über einer Fehlerschwelle liegt, ober welcher ein Körper als Ausschuss klassifiziert wird. Dadurch ist quasi ein Puffer gegeben, sodass auch bei genauer menschlicher Betrachtung kein Fehler am Körper erkannt werden kann. Es versteht sich, dass der Puffer nicht allzu groß sein sollte, um möglichst wenige Teile ausscheiden zu müssen.

Günstig ist es, wenn bei einer Anwendung des erfindungsgemäßen Verfahrens in der Massenproduktion der Körper vom Roboterarm aus einer Einrichtung zur Fertigung und/oder Qualitätskontrolle von freigeformten Körpern gehoben wird. Damit kann ein gesamter Qualitäts- und Kontrollprozess automatisiert werden.

Insbesondere in der Massenproduktion kann es vorkommen, dass transportierte Körper für eine Abnahme mit anschließender Inspektion ungünstig positioniert sind. Für solche Fälle hat es sich bewährt, dass der Körper vom Roboterarm in einer Umgreifeinrichtung positioniert wird und anschließend der Körper vom Roboterarm in einer anderen Ausrichtung aufgegriffen wird. Dadurch kann die Position des Körpers im Roboterarm geändert werden.

Die zweite Aufgabe wird erfindungsgemäß gelöst, wenn bei einer Vorrichtung der eingangs genannten Art eine Steuereinheit vorgesehen ist, mit welcher der Roboterarm steuerbar ist, wobei mit dem Roboterarm sequenziell je ein vorgegebener Teilbereich der Oberfläche des Körpers etwa senkrecht zu einer optischen Achse zumindest einer ortsfesten Kamera stellbar ist, um die Oberfläche des Körpers bereichsweise unter etwa senkrechter Ausrichtung der Teilbereiche zur optischen Achse mit der zumindest einen Kamera zu erfassen.

Ein Vorteil einer erfindungsgemäßen Vorrichtung ist insbesondere darin zu sehen, dass die Steuereinheit den Roboterarm so ansteuern kann, dass dieser unterschiedliche Teilbereiche der Oberfläche des Körpers senkrecht zur optischen Achse der Kamera stellt und in weiterer Folge diese die Oberfläche aufnimmt. Die Teilbereiche der Oberfläche des Körpers sind davon abhängig, wie sich die Oberfläche des Körpers darstellt. Somit steuert die Steuereinheit den Roboterarm dahin gehend an, dass jeder Teilbereich der Oberfläche des dreidimensionalen Körpers als quasi plane Oberfläche aufnehmbar ist. Die einzelnen Teilbereiche sind wie plane Oberflächen ohne Probleme mit hoher Genauigkeit von der Kamera erfassbar.

Für eine Untersuchung einer Oberfläche eines Körpers mit größtmöglicher Genauigkeit ist es von Vorteil, wenn ortsfeste Lichtquellen wie LEDs vorgesehen sind, mit welchen die Oberfläche des Körpers mit Licht beleuchtbar ist, wobei die LEDs in unterschiedlichen Zuständen betreibbar sind. Durch das Beleuchten der Oberfläche mit Licht wird sichergestellt, dass sämtliche Fehlstellen von der Kamera erfassbar sind. Bei der Qualitätskontrolle von freigeformten Körpern werden diese zumeist auf mehrere Arten von Fehlstellen untersucht, wie z. B. Glanzvariationen, Kratzer und Fleckigkeit und/oder insbesondere bei Kunststoffen Printmusterfehler, Bindenähte, Einfallsstellen, Schlieren und sogenannte "Tigerstreifen". Dazu sind die LEDs für jeden Teilbereich der Oberfläche in mehreren verschiedenen Zuständen schaltbar, da das Erkennen von verschiedenen Arten von Fehlstellen aufgrund von z. B. unterschiedlicher geometrischer Ausformungen unterschiedliche Belichtungen benötigt. Alternativ ist es auch möglich, Muster über LCD-Schirme zu projizieren und die reflektierte Strahlung mit einer oder mehreren Kameras zu erfassen.

Weiter ist es von Vorteil, wenn eine Einrichtung zur Fertigung und/oder Qualitätskontrolle von freigeformten Körpern vorgesehen ist, aus welcher der Körper vom Roboterarm abnehmbar ist, damit ein gesamter Produktionsprozess inklusive Qualitätskontrolle automatisiert ablaufen kann.

Vorteilhaft ist es auch, wenn eine Umgreifeinrichtung vorgesehen ist, mit welcher der Roboterarm die Halteposition des Körpers ändert, damit alle Teilbereiche der Oberfläche des Körpers von der Kamera erfassbar sind. Weiter ist die Position des Körpers zwischen dem Abnehmen aus der Strecke zur Fertigung und/oder Qualitätskontrolle von Freiformteilen und dem Untersuchen seiner Oberfläche veränderbar.

Günstig ist es, wenn der Roboterarm um mehrere Achsen, insbesondere um mindestens drei Achsen auslenkbar ist, um eine größtmöglichste Flexibilität desselben zu erreichen. Durch diese Maßnahme ist eine Position des Roboterarms und somit die Ausrichtung der Teilbereiche der Oberfläche des Körpers in sehr kurzen Zeitabständen veränderbar.

Gemäß den vorstehend genannten Vorteilen erfolgt eine Verwendung der erfindungsgemäßen Vorrichtung vorzugsweise beim bereichsweisen Abtasten einer Oberfläche von Freiformteilen. Als Freiformteile mit zumindest teilweise nicht planen Oberflächen kommen insbesondere Spritzgussteile aus Kunststoff in Betracht. Allerdings können auch andere Oberflächen, z. B. lackierte Oberflächen wie Karosserieteile, entsprechend untersucht werden.

Eine weitere Verwendung einer erfindungsgemäßen Vorrichtung erfolgt typischerweise bei der automatisierten Fehleranalyse und Glanzcharakterisierung von Oberflächen von Freiformteilen.

Weitere Vorteile, Merkmale und Wirkungen der Erfindung ergeben sich aus dem dargestellten Ausführungsbeispiel. In den Zeichnungen, auf welche dabei Bezug genommen wird, zeigen:
- Fig. 1: eine schematische Darstellung einer erfindungsgemäßen Vorrichtung;
- Fig. 2: ein bereichsweises Erfassen einer Oberfläche eines Körpers.

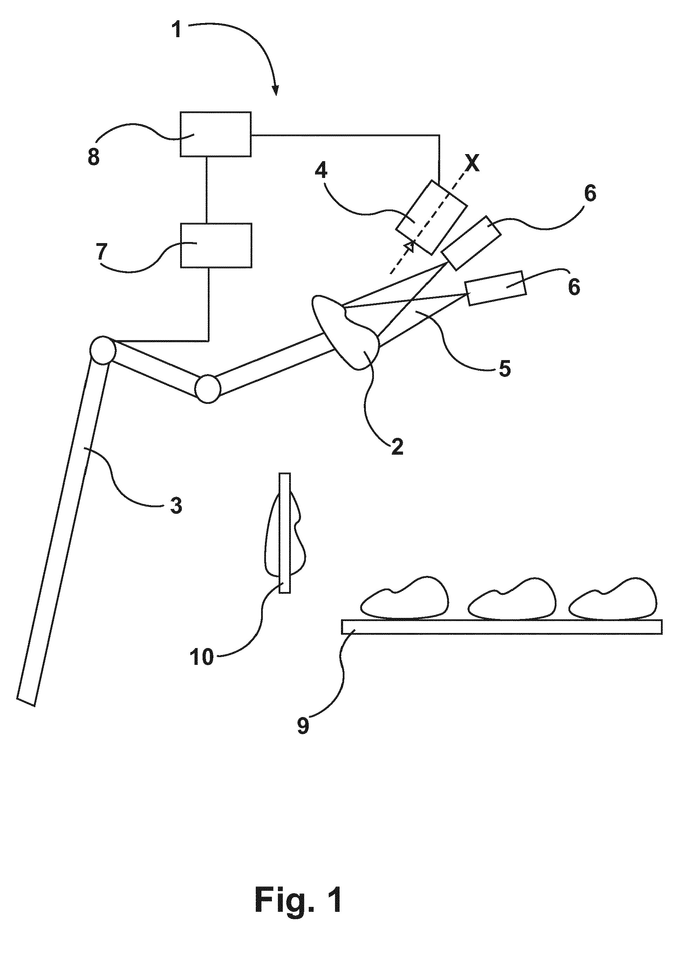

Fig. 1 zeigt eine erfindungsgemäße Vorrichtung 1, umfassend einen Roboterarm 3, der einen freigeformten dreidimensionalen Körper 2 hält, sowie eine Kamera 4 und Lichtquellen wie LEDs 6. Weiter ist eine Steuereinheit 7 zur Steuerung des Roboterarms 3 und eine Auswerteeinheit 8 dargestellt, welche von der Kamera 4 aufgenommene Bilder durch Datenverarbeitung auswertet. Zusätzlich zeigt Fig. 1 eine optionale Umgreifeinrichtung 10 und eine Einrichtung 9 zur Fertigung und/oder Qualitätskontrolle von Spritzgussteilen. Der Roboterarm 3 ist üblicherweise um mehrere Achsen, insbesondere um mindestens drei Achsen, auslenkbar. Es kann sich dabei jedoch auch um einen Roboterarm handeln, welcher nur linienweise bewegbar ist, einen sogenannten Linearroboter.

Eine Oberfläche des dreidimensionalen Körpers 2 wird von Licht 5 aus den LEDs 6 beleuchtet, wobei die LEDs 6 ortsfest angebracht sind. Dabei sind bevorzugt mehrere Lichtquellen mit je mehreren LEDs 6 vorgesehen. Die LEDs 6 können die Oberfläche des Körpers 2 in unterschiedlichen Zuständen beleuchten. Die unterschiedlichen Zustände können die Lichtstärke einzelner LEDs 6 oder den Zustand (ein/aus) einzelner LEDs 6 betreffen und sind davon abhängig, auf welche Fehlstellen die Oberfläche bzw. ein Teilbereich 11 der Oberfläche des Körpers 2 untersucht wird. Das von der Oberfläche des Körpers 2 reflektierte Licht 5 wird von der ebenfalls ortsfesten Kamera 4 aufgenommen, wobei der Körper 2 vom Roboterarm 3 so gedreht wird, dass die Oberfläche des Körpers 2 dabei etwa senkrecht zu einer optischen Achse X der Kamera 4 gestellt wird. Da die Oberfläche des Körpers 2 nicht plan, sondern freigeformt ist, erfolgt das Senkrechtstellen der Oberfläche des Körpers 2 zur optischen Achse X der Kamera 4 und somit das Erfassen dieser Oberfläche bereichsweise.

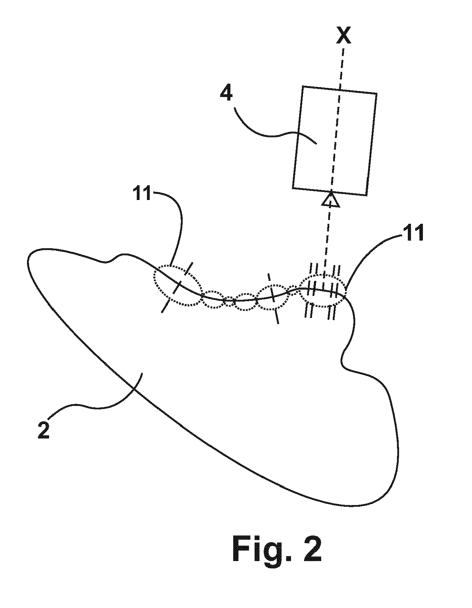

In Fig. 2 ist dieses bereichsweise Erfassen der Oberfläche des Körpers 2 schematisch dargestellt. Der Körper 2 wird vom Roboterarm 3 immer wieder nachgedreht, sodass je ein Teilbereich 11 der Oberfläche des Körpers 2 senkrecht zu der optischen Achse X der Kamera 4 steht und von dieser erfasst wird. Die Abmessungen der Teilbereiche 11 sind dabei von einer Krümmung der Oberfläche des Körpers 2 abhängig und können dementsprechend verschieden groß sein, wie dies in Fig. 2 angedeutet ist. Die Größe der Teilbereiche 11 ist optimalerweise so gewählt, dass die Teilbereiche 11 klein genug sind, um alle Fehlstellen erkennen zu können, jedoch so groß, dass ein Untersuchungsprozess nicht zu lange dauert. Je komplexer die Oberfläche des Körpers 2 ist, desto kleiner müssen die Teilbereiche 11 sein, um etwaige Fehlstellen erkennen zu können. Die Festlegung der Teilbereiche 11 erfolgt üblicherweise zu Beginn einer Produktion eines neuen Produktes, wobei beispielsweise CAD-Daten eingesetzt werden, um die Teilbereiche 11 vorzubestimmen. Gleichzeitg mit dem Erfassen der Teilbereiche von der Kamera 4 werden diese vom Licht 5 aus den LEDs 6 beleuchtet. Dabei werden die LEDs 6 unterschiedlich geschaltet, abhängig davon, auf welche Art von Fehlstellen jeder Teilbereich 11 der Oberfläche des Körpers 2 untersucht wird.

Der Roboterarm 3 und seine Bewegungen werden von der Steuereinheit 7, wie in Fig.1 ersichtlich, gesteuert, wobei der Roboterarm 3 in drei unterschiedlichen Betriebszuständen betrieben werden kann. Die verschiedenen Betriebszustände sind davon abhängig, auf welche Eigenschaften der Körper 2 geprüft werden soll. Die von der Kamera 4 aufgenommenen Bilder der Oberfläche des Körpers 2 werden von der Kamera 4 zu der Auswerteeinheit 8 gesendet und von dieser ausgewertet. Als fehlerhaft klassifizierte Körper 2 werden dann ausgeschieden.

Es kann vorgesehen sein, dass der Roboterarm 3 Teil eines Produktionsprozesses von freigeformten Körpern 2 ist. Dabei nimmt der Roboterarm 3 den Körper 2 aus der Einrichtung 9 zur Fertigung bzw. Qualitätskontrolle von freigeformten Körpern 2 und dreht diesen so, dass die gesamte Oberfläche des Körpers 2 bereichsweise von der Kamera 4 aufgenommen wird. Falls der Körper 2 auf der Einrichtung 9 in einer ungünstigen Ausrichtung angeliefert wird, wird die optionale Umgreifeinrichtung 10 genützt. Mithilfe dieser Umgreifeinrichtung 10 ist es möglich, dass der Roboterarm 3 den Körper 2 zunächst in dieser positioniert und an einer anderen Stelle angreift und wieder aufnimmt. Dadurch ist es beispielsweise möglich, dass Freiformteile mit einem planen Boden, aber gekrümmter Oberfläche, mit dem Boden auf einem Förderband transportiert und von diesem mit dem Roboterarm 3 abgenommen werden, danach aber umgekehrt für die Inspektion der wichtigeren, nicht planen Oberfläche wieder aus der Umgreifeinrichtung 10 aufgenommen und untersucht werden.

## Patentansprüche

1. Verfahren zur optischen Untersuchung einer Oberfläche eines Körpers (2), insbesondere eines Freiformteils aus Kunststoff, wobei der Körper (2) von einem Roboterarm (3) gehalten wird, **dadurch gekennzeichnet, dass** ein vorgegebener Teilbereich (11) der Oberfläche des Körpers (2) etwa senkrecht zu einer optischen Achse (X) zumindest einer ortsfesten Kamera (4) gestellt und mit dieser erfasst wird, wonach der Körper (2) vom Roboterarm (3) zur Erfassung des nächsten Teilbereiches (11) nachgeführt wird, um die Oberfläche des Körpers (2) bereichsweise mit der zumindest einen Kamera (4) unter etwa senkrechter Ausrichtung der Teilbereiche (11) zur optischen Achse (X) zu erfassen.

2. Verfahren nach Anspruch 1, **dadurch gekennzeichnet, dass** sequenziell alle vorgegebenen Teilbereiche (11) der Oberfläche des Körpers (2) etwa senkrecht zu einer Achse der zumindest einen Kamera (4) gestellt und von dieser erfasst werden, wobei Abmessungen der Teilbereiche (11) von einer Krümmung der Oberfläche des Körpers (2) vorgegeben werden.

3. Verfahren nach Anspruch 1 oder 2, **dadurch gekennzeichnet, dass** die Oberfläche des Körpers (2) von Licht (5) aus insbesondere ortsfesten Lichtquellen wie LEDs (6) beleuchtet wird und die Reflexionen des Lichtes (5) an der Oberfläche des Körpers (2) von der Kamera (4) erfasst werden.

4. Verfahren nach einem der Ansprüche 1 bis 3, **dadurch gekennzeichnet, dass** eine Bewegung des Roboterarms (3) von einer Steuereinheit (7) gesteuert wird.

5. Verfahren nach einem der Ansprüche 1 bis 4, **dadurch gekennzeichnet, dass** von der zumindest einen Kamera (4) erfasste Bilder der Oberfläche zu einer Auswerteeinheit (8) gesendet und von dieser ausgewertet werden.

6. Verfahren nach Anspruch 4 oder 5, **dadurch gekennzeichnet, dass** Signale von der Auswerteeinheit (8) zur Steuereinheit (7) gesendet werden.

7. Verfahren nach einem der Ansprüche 1 bis 6, **dadurch gekennzeichnet, dass** von der Auswerteeinheit (8) Kriterien für Defekte vorgegeben werden.

8. Verfahren nach einem der Ansprüche 1 bis 7, **dadurch gekennzeichnet, dass** der Körper (2) vom Roboterarm (3) aus einer Einrichtung (9) zur Fertigung und/oder Qualitätskontrolle von freigeformten Körpern (2) gehoben wird.

9. Verfahren nach einem der Ansprüche 1 bis 8, **dadurch gekennzeichnet, dass** der Körper (2) vom Roboterarm (3) in einer Umgreifeinrichtung (10) positioniert wird und anschließend der Körper (2) vom Roboterarm (3) in einer anderen Ausrichtung aufgegriffen wird.

10. Vorrichtung (1) zur optischen Untersuchung eines Körpers (2), insbesondere eines Freiformteils aus Kunststoff, umfassend einen Roboterarm (3), der den Körper (2) hält, **dadurch gekennzeichnet, dass** eine Steuereinheit (7) vorgesehen ist, mit welcher der Roboterarm (3) steuerbar ist, wobei mit dem Roboterarm (3) sequenziell je ein vorgegebener Teilbereich (11) der Oberfläche des Körpers (2) etwa senkrecht zu einer optischen Achse (X) zumindest einer ortsfesten Kamera (4) stellbar ist, um die Oberfläche des Körpers (2) bereichsweise unter etwa senkrechter Ausrichtung der Teilbereiche (11) zur optischen Achse (X) mit der zumindest einen Kamera (4) zu erfassen.

11. Vorrichtung (1) nach Anspruch 10, **dadurch gekennzeichnet, dass** ortsfeste Lichtquellen wie LEDs (6) vorgesehen sind, mit welchen die Oberfläche des Körpers (2) mit Licht (5) beleuchtbar ist, wobei die LEDs (6) in unterschiedlichen Zuständen betreibbar sind.

12. Vorrichtung (1) nach Anspruch 10 oder 11, **dadurch gekennzeichnet, dass** eine Einrichtung (9) zur Fertigung und/oder Qualitätskontrolle von freigeformten Körpern (2) vorgesehen ist, aus welcher der Körper (2) vom Roboterarm (3) abnehmbar ist.

13. Vorrichtung (1) nach einem der Ansprüche 10 bis 12, **dadurch gekennzeichnet, dass** eine Umgreifeinrichtung (10) vorgesehen ist, mit welcher der Roboterarm (3) die Halteposition des Körpers (2) ändert.

14. Vorrichtung (1) nach einem der Ansprüche 10 bis 13, **dadurch gekennzeichnet, dass** der Roboterarm (3) um mehrere Achsen, insbesondere um mindestens drei Achsen, auslenkbar ist.

15. Verwendung einer Vorrichtung (1) nach einem der Ansprüche 10 bis 14 zum bereichsweisen Abtasten einer Oberfläche von Freiformteilen.
